# EUROPEAN PATENT APPLICATION

(11) **EP 3 767 765 A1**
(43) Date of publication of application: **20.01.2021**
(21) Application number: 20186088.9
(22) Date of filing: 15.07.2020
(51) Int. Cl.: H02G 3/08, H02G 3/12, H02G 3/18

(54) **ELECTRIC OR ELECTRONIC DEVICE**

(30) Priority: 16.07.2019 BE 201905464
(71) Applicant: Niko NV, 9100 Sint-Niklaas (BE)
(72) Inventor: DE PAUW, Frederick, 9230 Wetteren (BE); ROCTUS, Jerry, 4567AL Clinge (NL)
(74) Representative: DenK iP bv

(57) **Abstract**

An electric or electronic device (1) for being built into a wall or ceiling comprises a housing front (2a), a housing back (2b) connected to the housing front (2a), and a frame (11). The housing front (2a) comprises at least two recesses (16) for housing an electric or electronic device function (13). The frame (11) comprises a central opening (17) to receive the electric or electronic device function (13). The housing front (2a) further comprises, in between two neighboring recesses (16) and at an outer surface (SI) of a side wall (4) of the housing front (2a), three pairs of apertures (14) for receiving electrical wires (23) for connecting the electric or electronic device (1) to an electrical network, and a ridge (19) in between every two neighboring recesses (16), the ridge (19) extending towards the frame (11), or when built in the wall or ceiling, in a direction away from the wall or ceiling, wherein the ridge (19) comprises three apertures (20) adapted to receive the electrical wires (23) guided from the three pairs of apertures (14).

## Description

### Technical Field

The present invention relates to an electric or electronic device for building into a wall or ceiling.

### Background

For electric or electronic devices to operate, the devices are required to be connected to an electrical network. Such connection is mostly established through electrical wires. For example, when multiple electrical sockets are to be installed in a wall or a ceiling, a bunch of electrical wires are connected between the electrical sockets and the electrical network. In such a scenario, it is necessary to efficiently route the electrical wires in limited space available in a wall or ceiling, which is not always easy to do.

### Summary of the Invention

It is an object of embodiments of the present invention to provide an electric or electronic device for building into a wall or ceiling for which it is easy to connect electrical wires.

The above objective is accomplished by a device according to embodiments of the present invention.

The present invention provides an electric or electronic device for being built into a wall or ceiling The electric or electronic device comprises a housing with a housing front and a housing back connected to the housing front. The housing front comprises at least two recesses, wherein each is adapted for housing an electric or electronic device function. The electric or electronic device furthermore comprises a frame adapted for being connected to the housing front and for fixing the electric or electronic device to the wall or ceiling, the frame having a central opening adapted to receive the electric or electronic device functions. The housing front comprises in between two neighboring recesses and at an outer surface of a side wall of the housing front, three pairs of apertures for receiving electrical wires for connecting the electric or electronic device to an electrical network, and a ridge in between every two neighboring recesses, the ridge extending towards the frame, or when built in the wall or ceiling, in a direction away from the wall or ceiling. The ridge comprises three apertures adapted to receive the electrical wires guided from the three pairs of apertures.

According to the present invention, the three pairs of apertures are located at the top of the electric or electronic device during installation of the electric or electronic device into the wall or ceiling. This reduces the effort that needs to be spent by a user for connecting the electrical wires connected to the electrical network to the electric or electronic device, as compared to a conventional device where such apertures are provided at a rear of the electric or electronic device. As the three pairs of apertures are provided in between each two neighbouring recesses for receiving an electric or electronic device, the three pairs of apertures serve to connect two electric or electronic device functions. As such, the requirement of separate apertures at different locations on the housing front is eliminated, thereby saving time and effort. According to embodiments of the invention, the housing front may further comprise a barrier around and in between each of the three apertures, the barrier extending in a direction perpendicular away from a surface of the ridge.

The housing front and the housing back may have chamfered features which, when the housing front and the housing back are connected to each other, form a V-shaped feature, such that the three pairs of apertures are located within the V-shaped feature.

According to embodiments of the invention, the three pairs of apertures may be provided in a recess at the outer surface of the side wall of the housing front.

The housing front may, according to embodiments of the invention, be connected to the housing back by means of a snap connection.

According to further embodiments of the invention, the housing front may further comprise a locking mechanism in each of the three apertures in the ridge, the locking mechanism being adapted for locking and unlocking the electrical wires.

### Brief Description of the Drawings

It has to be noted that same reference signs in the different figures refer to same, similar or analogous elements.
FIG. 1 illustrates an exploded view of an electric or electronic device according to embodiments of the invention;
FIG. 2 illustrates a perspective view of a sub-assembly of the electric or electronic device of

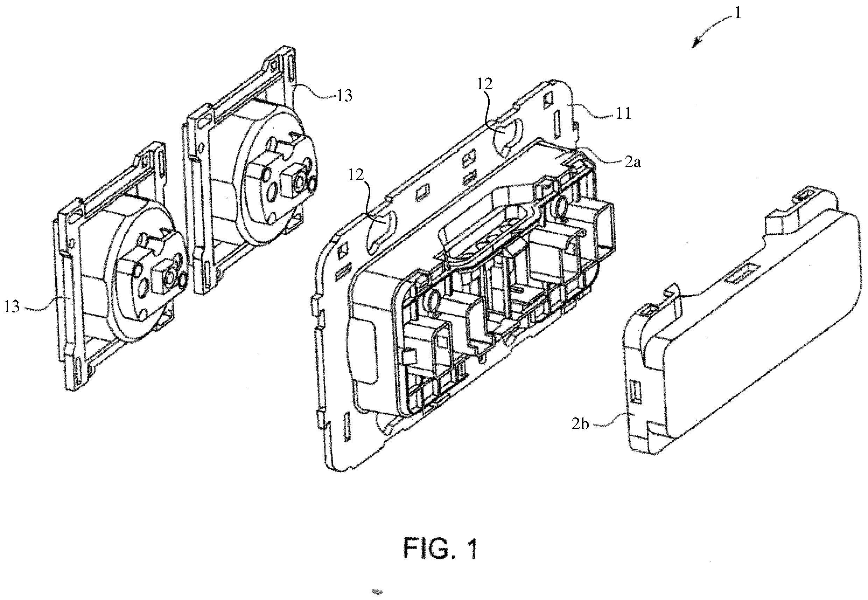

FIG. 1, according to an embodiment of the present invention;

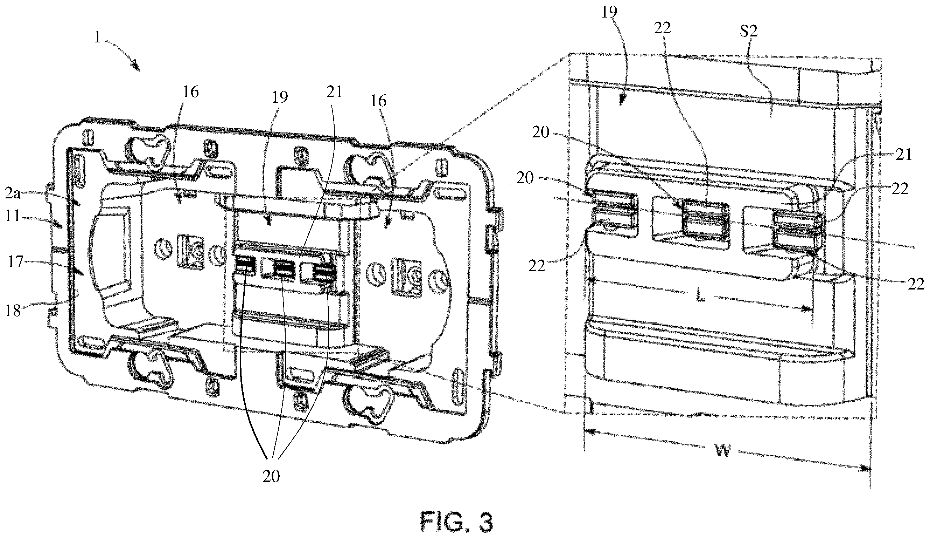

FIG. 3 illustrates a perspective view of the sub-assembly including a locking mechanism, according to an embodiment of the present invention;

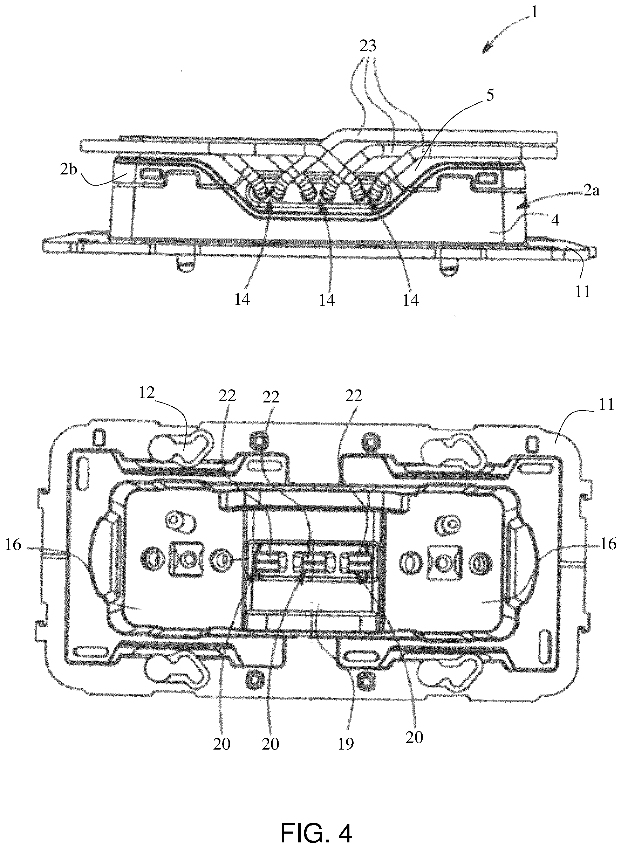

FIG. 4 illustrates a top view and a front view of the sub-assembly, according to another embodiment of the present invention;

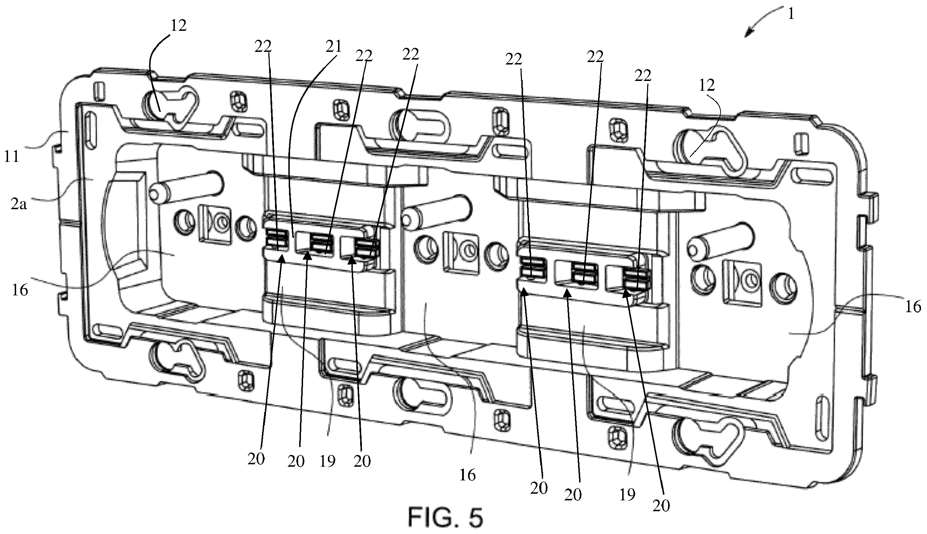

FIG. 5 illustrates a perspective view of another sub-assembly, according to an embodiment of the present invention; and

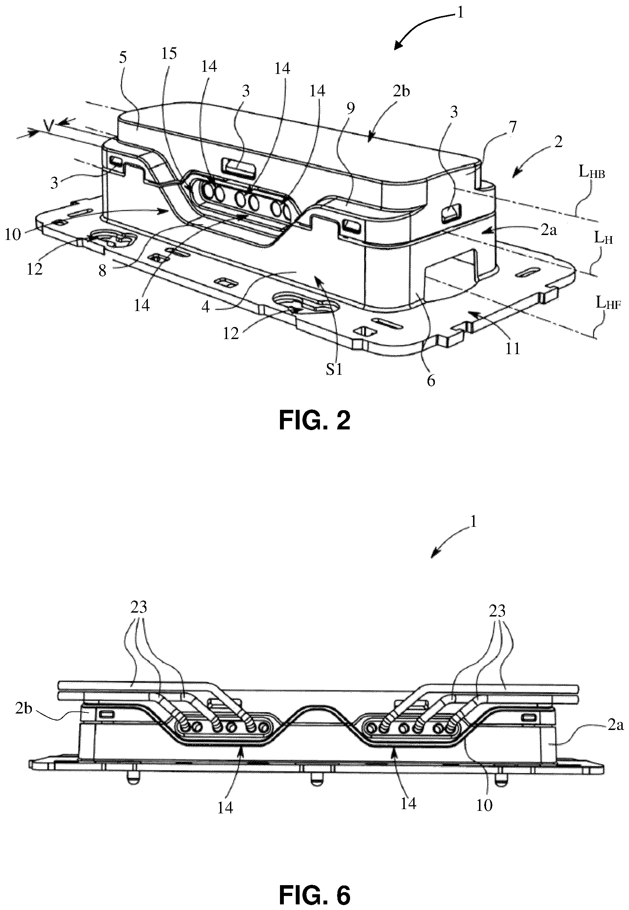

FIG. 6 illustrates a top view of the sub-assembly of FIG. 5, according to another embodiment of the present invention.

### Detailed Description

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also comprises indirect contact between part A and part B, in other words also comprises the case where intermediate parts are present in between part A and part B.

Not all embodiments of the invention all features of the invention. In the following description and claims, any of the claimed embodiments can be used in any combination.

The present invention provides an electric or electronic device for being built into a wall or ceiling. The electric or electronic device comprises a housing comprising a housing front and a housing back connected to the housing front, the housing front comprising at least two recesses, wherein each recess is adapted for housing an electric or electronic device function; and a frame adapted for being connected to the housing front and for fixing the electric or electronic device to the wall or ceiling, the frame having a central opening adapted to receive the electric or electronic device functions. The housing front further comprises, in between two neighboring recesses and at an outer surface of a side wall of the housing front, three pairs of apertures for receiving electrical wires for connecting the electric or electronic device to an electrical network and a ridge in between every two neighboring recesses, the ridge extending towards the frame, or when built in the wall or ceiling, in a direction away from the wall or ceiling, wherein the ridge comprises three apertures adapted to receive, from behind, the electrical wires guided from the three pairs of apertures.

According to the present invention, the three pairs of apertures are located at the top of the electric or electronic device during installation of the electric or electronic device into the wall or ceiling. This reduces the effort that needs to be spent by a user for connecting the electrical wires connected to the electrical network to the electric or electronic device, as compared to a conventional device where such apertures are provided at a rear of the electric or electronic device. As the three pairs of apertures are provided in between each two neighbouring recesses for receiving an electric or electronic device, the three pairs of apertures serve to connect two electric or electronic device functions. As such, the requirement of separate apertures at different locations on the housing front is eliminated, thereby saving time and effort. Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims. No element, act, or instruction used herein should be construed as critical or essential unless explicitly described as such. Also, as used herein, the articles "a" and "an" are intended to comprise one or more items and may be used interchangeably with "one or more".

Referring to FIG. 1, an exploded view of an electric or electronic device 1 is illustrated. The electric or electronic device 1 is adapted for being built into a wall or ceiling (not shown). For the ease of explanation, in the following description, the electric or electronic device 1 will be referred to as the device 1. Also, for explaining the invention, the example of an electrical socket will be used. However, it has to be understood that this is not intended to limit the invention in any way. The mechanism described in this invention can be used for an electric or electronic device that comprises at least two electric or electronic functions and that is connected to the electrical network by means of electrical wires.

A device 1 according to embodiments of the invention is illustrated in FIG. 1 (exploded view) and FIG. 2 (assembled view). The device 1 comprises a housing 2 comprising a housing front 2a and a housing back 2b. The housing front 2a and the housing back 2b may be rectangular structures and may be connected to each other so as to form the housing 2 of the device 1. According to embodiments of the invention, the housing front 2a may be connected to the housing back 2b by means of a snap connection 3. When the housing front 2a is connected to the housing back 2b, a first side wall 4 of the housing front 2a and a first side wall 5 of the housing back 2b are aligned to form one side wall of the housing 2. Likewise, a second side wall 6 of the housing front 2a and a second side wall 7 of the housing back 2b are aligned to form another side wall of the housing 2.

The housing front 2a comprises a first chamfered feature 8 defined on the first side wall 5 and extending along a longitudinal axis 'L_{HF}' of the housing front 2a. The housing back 2b also comprises a second chamfered feature 9 defined on the first side wall 5 and extending along a longitudinal axis 'L_{HB}' of the housing back 2b. Each of the first chamfered feature 8 and the second chamfered feature 9 are so designed to form a V-shaped feature 10 when the housing front 2a is connected to the housing back 2b. The V-shaped feature 10 defines a continuous edge having a width 'V' and extending along a longitudinal axis 'L_{H}' of the housing 2. According to embodiments of the invention, the width 'V' of the V-shaped feature 10 may be uniform along the longitudinal axis 'L_{H}' of the housing 2. According to other embodiments of the invention, the width 'V' of the V-shaped feature 10 may vary along the longitudinal axis 'L_{H}' of the housing 2.

The device 1 further comprises a frame 11. The frame 11 is adapted for being connected to the housing front 2a (see FIG. 1). The frame 11 may have a rectangular plate structure and comprises multiple screw holes 12 for fixing the device 1 to the wall or ceiling. The frame 11 further comprises a central opening (see further) for receiving at least two electric or electronic device functions 13. According to the present embodiment, the electric or electronic device functions 13 may be electrical sockets, as shown in FIG. 1. However, this is not intended to limit the invention in any way. Any other electric or electronic device function or combination of electric or electronic device functions as known by a person skilled in the art may fit into the central opening in the frame 11. For example but not limiting, other electric or electronic device functions that may be used with the present invention are switches, USB sockets, smart sockets, TV sockets, dimmers, and the like. Depending on the type of electric or electronic device 1, the device 1 may then furthermore comprise various other components. For example, in case of an electrical socket, the electrical socket may furthermore comprise a pin-earth, side-earthing, pole contacts, central plates and a cover plate.

According to embodiments of the invention, the housing front 2a further comprises three pairs of apertures 14. The three pairs of apertures 14 are defined at an outer surface 'S1' of the first side wall 5 of the housing front 2a. According to embodiments of the invention, the three pairs of apertures 14 may be provided in a recess 15 at the outer surface 'S1' of the first side wall 5 of the housing front 2a. Each pair of apertures 14 is defined along the longitudinal axis 'L_{HF}' of the housing front 2a and may be located distant from an adjacent pair of apertures. Each of the three pairs of apertures 14 is adapted for receiving electrical wires for connecting the device 1 to an electrical network. With 'electrical network' is meant a network of electrical wiring provided for supplying electrical current to electric or electronic appliances in the building. For example, the electrical network in a house may refer to a set of electrical wires drawn in the wall or ceiling to fetch electrical current from a main power source of the house to the electric or electronic appliances.

FIG. 3 illustrates a perspective view of a sub-assembly of the housing front 2a with the frame 11 attached thereto. According to embodiments of the invention, the housing front 2a further comprises at least two recesses, in the example given two recesses 16. Each of the at least two recesses 16 may be a hollow part in the front housing 2a that is adapted for housing an electric or electronic device function 13. It has to be understood that the device 1 may, according to embodiments of the invention, also comprise more than two recesses 16 for receiving electric or electronic device functions 13. The frame 11 comprises a central opening 17, where a periphery 18 of the central opening 17 is adapted to connect with the housing front 2a, when the frame 11 is provided onto the housing front 2a. The central opening 17 is adapted to receive at least two electric or electronic device functions 13.

The housing front 2a may further comprise a ridge 19 having width 'W' and located between each two neighboring recesses 16, as shown in FIG. 3. According to embodiments of the invention, the ridge 19 may extend towards the frame 11. In other words, when the device 1 is built into the wall or ceiling, the ridge 19 extends in a direction away from the wall or ceiling. The ridge 19 may comprise three apertures 20 located along the longitudinal axis 'L_{HF}' of the housing front 2a.

The housing front 2a may further comprise a barrier 21 around and in between each of the three apertures 20 defined in the ridge 19. The barrier 21 has a length 'L' and extends in a direction perpendicularly away from a surface 'S2' of the ridge 19. The barrier 21 extends to a predetermined distance from the surface 'S2', so that each of the three apertures 20 are not accessible by, e.g. a finger of a user. The length 'L' of the barrier 21 may be equal to the width 'W' of the ridge 19. In another embodiment, the length 'L' of the barrier 21 may be less than the width 'W' of the ridge 19. In yet another embodiment, the barrier 21 may be integrally formed with the ridge 19. In yet another embodiment, the barrier 21 may be a separate component adapted to couple with the ridge 19.

A locking mechanism 22 may be provided in each of the three apertures 20 in the ridge 19. According to embodiments of the invention, each locking mechanism 22 may, for example, comprise a snap connection.

FIG. 4 illustrates a side view (upper drawing) and a front view (lower drawing) of a device 1 according to embodiments of the invention. When holding the device 1 for installing in or on a wall or ceiling, the apertures 14 for receiving the electrical wires 23 are located at a side wall of the device. When providing the device 1 in the wall, these apertures 14 with the electrical wires 23 are not visible from outside. The three pairs of apertures 14 defined in the first side wall 4 of the housing front 2a are thus adapted for receiving electrical wires 23 for connecting the device 1 to the electrical network. The electrical wires 23, three for each of the electric or electronic device functions 13, are introduced through the three pairs of apertures 14. The electrical wires 23 are then guided to and locked in the locking mechanisms 22 in apertures 20. The locking mechanism 22 may, for example, be a snap mechanism, which closes automatically when an electrical wire 23 is inserted, thereby locking the electrical wire 23. This may be done before the housing back 2b is connected to the housing front 2a, such that the electrical wires 23 can be easily guided from the apertures 14 to the apertures 20 with the locking mechanism 22. The wires are then locked and the housing 2 can be closed by connecting the housing back 2b to the housing front 2a.

As can be seen from the drawings, the locking mechanisms 22 are provided in a ridge 19 on a front side of the device 1. Hence, when handling the device 1 for providing it into a wall or ceiling, no accidental touching of the wires or the locking mechanism is possible. As such, loosening of the electrical wires 23 or unintended release of the electrical wires 23 from apertures 20 may be prevented. Further, the presence of the barrier 21 surrounding the apertures 20 and thus the locking mechanism 22, even further reduces or even fully prevents accidental release or loosening of the electrical wires 23.

Unlocking the electrical wires 23 from the locking mechanism 22 can be done by, for example, inserting, from the front, a screwdriver into the aperture 20 and slightly tilt it. The snap mechanism is opened and the electrical wires 23 can be released. Hence, the device 1 has not to be taken out of the wall or ceiling for releasing the electrical wires 23, which makes the process of removing the device 1 from the wall or ceiling much simpler.

FIG. 5 illustrates a perspective front view of a device 1 according to a further embodiment of the present invention. The device 1 comprises a frame 11 provided onto a housing front 2a. According to the present embodiment, the housing front 504 may comprise three recesses 16, each adapted for receiving an electric or electronic device function 13. The housing front 2a comprises a ridge 19 in between each two neighbouring recesses 16. Hence, in the present embodiments, the housing front 2a may comprise 2 ridges 19. Each of the ridges 19 comprises three apertures 20, each aperture 20 comprising a locking mechanism 22. FIG. 6 illustrates a top view of the device 1 of FIG. 5. The housing front 2a comprises a further set of three pairs of apertures 14, if compared to the device 1 illustrated in FIGs. 1 to 4, located within an adjacent V-shaped feature 604.

Hence, embodiments of the present invention provide an electric or electronic device 1 comprising three pairs of apertures 14 located in between neighbouring recesses 16. Hence, the apertures 14 are provided at a central location, which makes it easier for a user or an installer.

Further, the slanted design of the V-shaped feature 10 provides adequate space for the electrical wires 23 once they are connected to the electric or electronic device function 13. Such spacing allows efficient routing and guiding of the electrical wires 23 when space available in, for example, a mounting box in the wall or ceiling, is limited.

While aspects of the present invention have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present invention as determined based upon the claims and any equivalents thereof.

## Claims

1. An electric or electronic device (1) for being built into a wall or ceiling, the electric or electronic device (1) comprising:
- a housing (2) comprising a housing front (2a) and a housing back (2b) connected to the housing front (2a), the housing front (2a) comprising at least two recesses (16), wherein each recess (16) is adapted for housing an electric or electronic device function (13); and
- a frame (11) adapted for being connected to the housing front (2a) and for fixing the electric or electronic device (1) to the wall or ceiling, the frame (11) having a central opening (17) adapted to receive the electric or electronic device functions (13),
**characterized in that** the housing front (2a) further comprises:
- in between two neighboring recesses (16) and at an outer surface (S1) of a side wall (4) of the housing front (2a), three pairs of apertures (14) for receiving electrical wires (23) for connecting the electric or electronic device (1) to an electrical network, and
- a ridge (19) in between every two neighboring recesses (16), the ridge (19) extending towards the frame (11), or when built in the wall or ceiling, in a direction away from the wall or ceiling, wherein the ridge (19) comprises three apertures (20) adapted to receive the electrical wires (23) guided from the three pairs of apertures (14).

2. Electric or electronic device (1) according to claim 1, wherein the housing front (2a) further comprises a barrier (21) around and in between each of the three apertures (20), the barrier (21) extending in a direction perpendicular away from a surface (S2) of the ridge (19).

3. Electric or electronic device (1) according to claim 2, wherein the barrier (21) is integrally formed with the ridge (19).

4. Electric or electronic device (1) according to claim 2, wherein the barrier (21) is a separate component adapted to couple with the ridge (19).

5. Electric or electronic device (1) according to any of the previous claims, wherein the housing front (2a) and the housing back (2b) have chamfered features (8, 9) which, when the housing front (2a) and the housing back (2b) are connected to each other, form a V-shaped feature (10), such that the three pairs of apertures (14) are located within the V-shaped feature (10).

6. Electric or electronic device (1) according to any of the previous claims, wherein the three pairs of apertures (14) are provided in a recess (15) at the outer surface (S1) of the side wall (4) of the housing front (2a).

7. Electric or electronic device (1) according to any of the previous claims, wherein the housing front (2a) is connected to the housing back (2b) by means of a snap connection (3).

8. Electric or electronic device (1) according to any of the previous claims, wherein the housing front (2a) further comprises:
- a locking mechanism (22) in each of the three apertures (20) in the ridge (19), the locking mechanism (22) being adapted for locking and unlocking the electrical wires (23).
